Europäisches Patentamt

European Patent Office

Office européen des brevets

(11) Veröffentlichungsnummer : **0 182 154 B1**

## (12) EUROPÄISCHE PATENTSCHRIFT

(45) Veröffentlichungstag der Patentschrift :
11.10.89

(51) Int. Cl.⁴ : **G 11 B 23/087**

(21) Anmeldenummer : **85113778.6**

(22) Anmeldetag : **29.10.85**

(54) Frontklappenverriegelung von Magnetbandkassetten insbesonders Videobandkassetten.

(30) Priorität : **10.11.84 DE 3441156 U**

(43) Veröffentlichungstag der Anmeldung :
**28.05.86 Patentblatt 86/22**

(45) Bekanntmachung des Hinweises auf die Patenterteilung : **11.10.89 Patentblatt 89/41**

(84) Benannte Vertragsstaaten :
**DE FR GB IT**

(56) Entgegenhaltungen :
**EP—A— 0 088 437**
**DE—A— 3 328 299**
**DE—A— 3 408 366**
**DE—U— 8 121 098**
**DE—U— 8 505 555**

(73) Patentinhaber : **Agfa-Gevaert AG**

**D-5090 Leverkusen 1 (DE)**

(72) Erfinder : **Pertzsch, Albert, Dipl.-Ing.**
**Leutstettener Strasse 29**
**D-8000 München 71 (DE)**
Erfinder : **Zeroni, Ludwig**
**Nelkenstrasse 40**
**D-8012 Ottobrunn (DE)**
Erfinder : **Brunner, Hubert**
**Mühlgasse 4a**
**D-8911 Weil (DE)**

EP 0 182 154 B1

## Beschreibung

Die vorliegende Erfindung betrifft die Verriegelung einer schwenkbaren Frontklappe für Magnetbandkassetten insbesonders Videobandkassetten.

Das Kassettengehäuse einer Videobandkassette, z. B. vom Typ VHS ist mit einer schwenkbaren, vorderseitigen Frontklappe als Deckel versehen welche das Magnetband bei nicht benutzter Kassette vor Verschmutzung schützt. Die Frontklappe öffnet sich beim Einsetzen der Kassette in den Videorecorder. Um den Öffnungs- und Verriegelungsmechanismus mit einer Vorspannung zu beaufschlagen befindet sich auf der Innenseite der seitlich übergreifenden Frontklappe eine Achse die einen Federwendel trägt und deren langer Federschenkel an der Frontklappe anliegt. Dies nur bei vormontierter Feder in der Frontklappe sonst findet die Abstützung im Gehäuseoberteil statt. Durch eine Verriegelungsplatte wird gleichzeitig die Frontklappe im geschlossenen Zustand gehalten. Für den Verriegelungsmechanismus werden kleine, gewendelte Federn (DE-C-28 37 889) oder eine Blattfeder (DE-C-28 37 890) welche einerseits an der Verriegelungsplatte angreifen und sich andererseits an einer gehäusefesten Wand abstützen, benutzt. Die zwei Federkombinationen sind zwar funktionstechnisch einwandfrei ihre Nachteile sind jedoch leicht zu erkennen wie z. B. erhöhte Anzahl der Teile für den Verriegelungsmechanismus, aufwendige Prüfung Montage Zusammenbau der in nacheinander folgenden Abschnitten erfolgt. In DE-A-33 28 299 und DE-U-81 21 098 ist jeweils eine angespritzte Kunststofffeder für die Verriegelungsplatte beschrieben die die Zahl der Teile — wie oben erwähnt — reduziert. In beiden Fällen ist die Kunststoffeder im Bereich der Schwenkachse angespritzt, während das freie Ende der Feder an der Gehäusewand die den Raum hinter der Verriegelungsplatte abschließt anliegt. Da Drehpunkt und Kraftangriffspunkt relativ weit auseinander liegen ist wegen der relativ großen Federauslenkung bei Öffnung der Verriegelungsplatte nach einer gewissen Zeit eine Materialermüdung zu erwarten wenn bei der Bewegung der Feder der elastische Verformungsbereich verlassen wird. Zur Erreichung der notwendigen Federkräfte muß auch ein entsprechend dünner Materialquerschnitt für die Kunststoffeder gewählt werden was aber auch die Spritzbarkeit beeinträchtigt.

Aufgabe der Erfindung ist es das Schließen der Frontklappe und deren Verriegelung ohne Verwendung von zwei unabhängig wirkenden Federn zu erreichen wobei die Maßnahme keinen Neubau eines gegebenenfalls vorhandenen Spritzwerkzeuges erfordern und auch eine vereinfachte Montierbarkeit mit sich bringen soll.

Gelöst wurde die Aufgabe bei einer Magnetbandkassette insbesondere einer Videobandkassette mit einer verschwenkbaren und durch eine Feder vorgespannten Frontklappe, wobei der Federwendel an einer Achse an der Innenseite der Seitenwand der Frontklappe steckt und das freie Ende des langen Federschenkels die Frontklappe untergreift, mit einer oberen Gehäusehälfte, die den langen Federschenkel beim Zusammensetzen übernimmt und einer unteren Gehäusehälfte, die an einer Innenseite im Bereich der Frontklappe eine schwenkbare Verriegelungsplatte aufweist gekennzeichnet dadurch daß die Verriegelungsplatte eine schräg verlaufende und die Platte überragende Nase, welche außermittig zum Drehpunkt der Platte verläuft besitzt und auf deren freiem Ende der lange Federschenkel aufliegt.

Details der Erfindung sind Gegenstand von Unteransprüchen und der Beschreibung.

Beim Öffnungs- und Verriegelungsmechanismus nach der Erfindung erübrigt sich die Feder an der Verriegelungsplatte. Im Zusammenwirken mit der Nase übernimmt die Frontklappenfeder eine Doppelfunktion wahr nämlich die Anfederung der Frontklappe und den Andruck der Verriegelungsplatte. Dies wiederum bedeutet Einsparung von Materialkosten, Reduzierung der Lagerhaltung und nicht zuletzt eine Vereinfachung der Montage beim Zusammenbau der Kassette wobei die Frontklappe und die untere Gehäusehälfte nur ineinander geschoben werden müssen.

Die Erfindung wird nun anhand von Zeichnungen näher erläutert und zwar zeigt

Fig. 1 eine perspektivische Ansicht einer Videobandkassette mit Frontklappe Verriegelungsplatte und den beiden Federn gemäß dem Stand der Technik,

Fig. 2 eine perspektivische Ansicht eines Teils der Frontklappe und der Verriegelungsplatte mit der erfindungsgemäßen Nase,

Fig. 3 eine Querschnittzeichnung nach Fig. 2 und

Fig. 4 eine perspektivische Zeichnung nach Fig. 2 jedoch mit einer besonders ausgebildeten Frontklappenfeder.

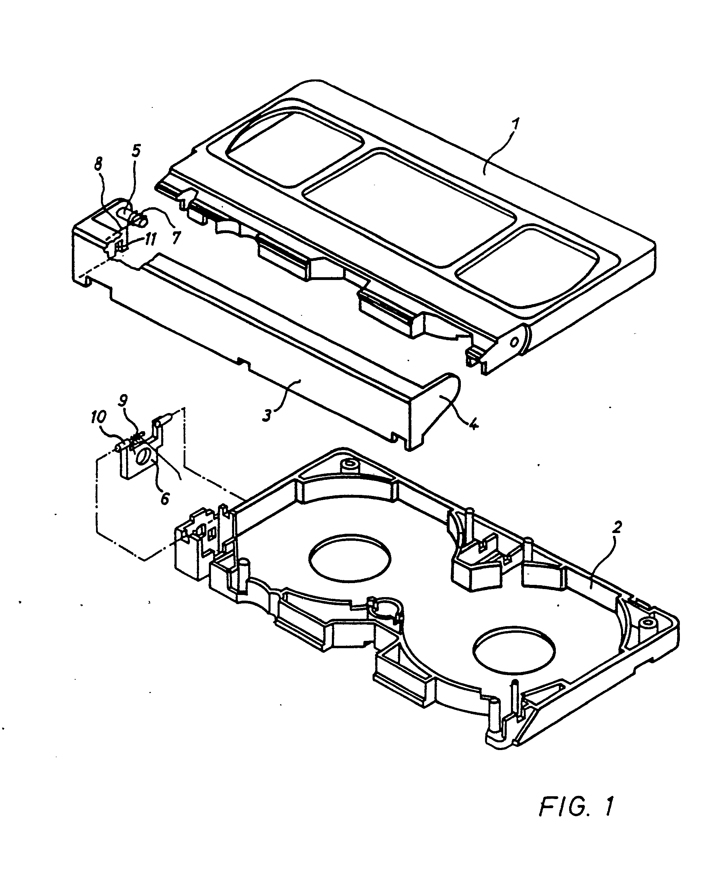

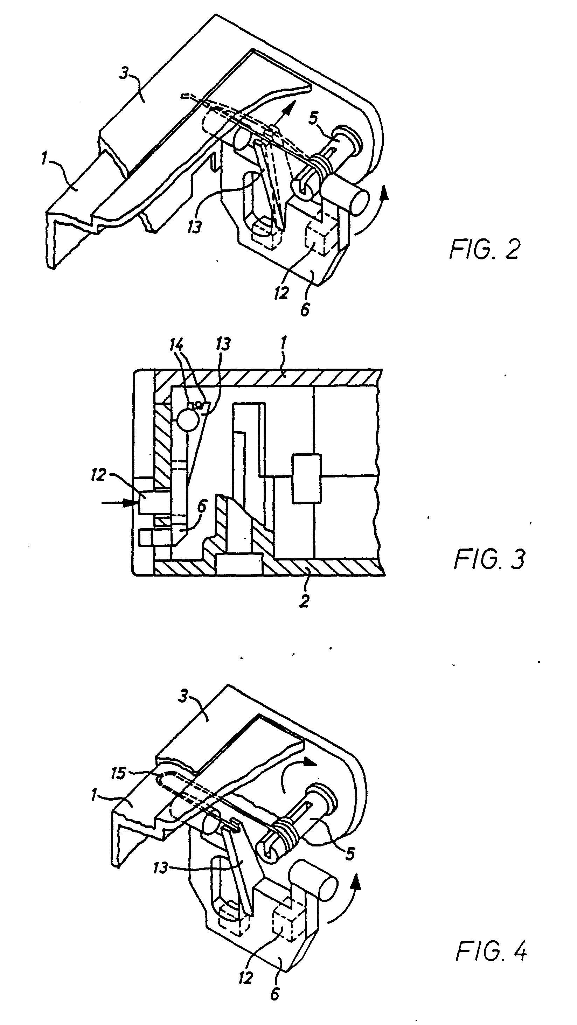

Fig. 1 zeigt eine typgemäße Videobandkassette bestehend aus einer oberen und unteren Gehäusehälfte 1, 2 die beim Zusammenbau miteinander verschraubt werden. Das Magnetband wird von der Abwickelspule an der Vorderkante des Gehäuses vorbei geführt und auf die Aufwickelspule gewickelt (Band und Spulen nicht dargestellt). Zum Schutz des Bandes vor Verschmutzung dient eine Frontklappe 3 mit Seitenwänden 4, auf deren Innenseiten Stifte 5 angespritzt sind um die die Frontklappe verschwenkt werden kann. In der unteren Gehäusehälfte ist eine schwenkbare Verriegelungsplatte eingesetzt welche zusammen mit einer in der Seitenwand 4, der Frontklappe befindlichen Vertiefung 11 wirksam ist. Die Feder 7 wird zuerst in der Frontklappe vorgespannt. Der Federwendel sitzt auf der Achse 5 und der lange Federschenkel 8 greift unter die Frontklappe. Eine zweite Feder die sogenannte Riegelfeder 9, sitzt mit ihrem Wendel auf einer Achse 10 der Verriegelungsplatte, wobei der kurze Federschenkel an der Verriegelungsplatte anliegt und der lange Federschenkel sich an einen Steg in der unteren Gehäusehälfte abstützt. Mit Hilfe des in Fig. 2 dargestellten Vorsprunges 12 läßt sich die Verriegelungsplatte verschwenken und damit die Frontklappe entsiegeln. Eine der beiden Federn und zwar die Riegelfeder kann entfallen, wenn man in die Verriegelungsplatte, wie in Fig. 2, 3 und 4 gezeigt eine schräg verlaufende Nase 13 derart einspritzt, daß sie außermittig zur Drehachse der Verriegelungsplatte liegt. Die Nase überragt die Oberkante der Platte soweit, daß der lange Federschenkel auf dem freien Ende der Nase horizontal aufliegt. Beim Zusammensetzen der Frontklappe und der unteren Gehäusehälfte wird der Federschenkel von der Nase untergriffen und ist somit vorgespannt. Zur Seitenführung der Feder hat die Nase an der Oberkante eine in etwa gabelförmige Aussparung 14. Mit dieser Ausführung des Verriegelungsmechanismus läßt sich neben der Materialeinsparung einer Feder und den damit verbundenen Lagerhaltungskosten und Prüfkosten die Montage von Frontklappe und unterer Gehäusehälfte in einfacher Weise automatisieren. Ein weiterer Vorteil der Erfindung ist daß die Nase auch nachträglich an die Verriegelungsplatte durch eine einfache Änderung des Werkzeuges angespritzt werden kann, jedenfalls ist für den Einbau der Nase ein Neubau eines Werkzeuges nicht erforderlich. Ein weiterer Vorteil der Erfindung besteht darin, daß die Federvorspannung variiert werden kann. Je nachdem die schräg verlaufende Nase näher oder weiter vom Drehpunkt der Verriegelungsplatte gelegt wird ist die Federvorspannung kleiner oder größer. Die Federvorspannung läßt sich ebenfalls gut abstimmen wenn man anstelle der üblichen Schenkeldrahtfeder eine Feder gemäß Fig. 4 einsetzt deren langer Schenkel 15 U-förmig gebogen ist. Die 180°- Biegung liegt im montierten Zustand unter der Frontklappe d. h. an der Stelle an der die einfache Feder gemäß Fig. 2 endet. Der verlängerte Federschenkel endet nahe dem Federwendel und kommt beim Zusammenbau der Frontklappe auf der Nase zum Aufliegen. Der verlängerte Arm der Frontklappenfeder kann auch zur benachbarten Seitenwand des Gehäuses hin gebogen sein. Die erfindungsgemäßen Maßnahmen fordern keine Änderung der Gehäuseteile der Bandkassette. Nach der Vormontage von Frontklappe und unterer Gehäusehälfte kann die obere Gehäusehälfte aufgesetzt werden wobei auf dieser der lange Federschenkel abgestützt wird.

## Patentansprüche

1. Magnetbandkassette insbesondere Videobandkassette mit einer verschwenkbaren und durch eine Feder (7) vorgespannten Frontklappe (3), wobei der Federwendel an einer Achse (5) auf der Innenseite der Seitenwand (4) der Frontklappe (3) sitzt und das freie Ende des langen Federschenkels (8) die Frontklappe (3) untergreift mit einer oberen Gehäusehälfte (1), die den langen Federschenkel beim Zusammensetzen übernimmt und einer unteren Gehäusehälfte (2), die an einer Innenseite im Bereich der Frontklappe eine schwenkbare Verriegelungsplatte (6) aufweist dadurch gekennzeichnet, daß die Verriegelungsplatte (6) eine schräg verlaufende und die Platte überragende Nase (13), welche außermittig zur Drehachse der Platte verläuft aufweist und auf deren freiem Ende der lange Federschenkel (8) aufliegt.

2. Magnetbandkassette nach Anspruch 1, dadurch gekennzeichnet, daß das freie Ende der Nase (13) eine insbesondere gabelförmige Aussparung (14) zur seitlichen Führung der Feder aufweist.

3. Magnetbandkassette nach Anspruch 1 und 2, dadurch gekennzeichnet, daß die Nase (13) die Verriegelungsplatte (6) soweit überragt, daß der lange Federschenkel (8) horizontal zur Auflage kommt.

4. Magnetbandkassette nach Anspruch 1 bis 3, dadurch gekennzeichnet, daß die Nase (13) aus dem gleichen Kunststoff wie die Verriegelungsplatte (6) besteht.

5. Magnetbandkassette nach Anspruch 1 bis 4, dadurch gekennzeichnet, daß der lange Federschenkel U-förmig (15) ausgebildet ist und im Bereich der Frontklappe (3) nach einer 180°-Biegung bis nahe dem Federwendel zurückgeführt ist wobei der verlängerte Teil des Federschenkels (8) auf der Nase (13) aufliegt.

## Claims

1. Magnetic tape cassette, especially a video tape cassette with a hinged front flap (3) which is pretensioned by a spring (7), in which the spring coil sits on a spindle (5) on the inner face of the side wall (4) of the front flap (3) and the free end of the long spring arm (8) engages under the front flap (3), with an upper housing half (1) which receives the long spring arm upon assembly and a lower housing half (2) which has a hinged locking plate (6) on one inner face in the region of the front flap, characterised in that the locking plate (6) has an inclined lug (13) which projects over the plate and extends eccentrically with respect to the axis of rotation of the plate, and the long spring arm (8) rests on the free end thereof.

2. Magnetic tape cassette as claimed in claim 1, characterised in that the free end of the lug (13) has a cut-out (14) which is especially fork-shaped for lateral guiding of the spring.

3. Magnetic tape cassette as claimed in claims 1 and 2, characterised in that the lug (13) projects over the locking plate (6) to such an extent that the long spring arm (8) comes to rest on it horizontally.

4. Magnetic tape cassette as claimed in claims 1 to 3, characterised in that the lug (13) is made from the same plastic material as the locking plate (6).

5. Magnetic tape cassette as claimed in claims 1 to 4, characterised in that the long spring arm is of U-shaped construction (15) and in the region of the front flap (3) after a 180º bend is bent back almost to the spring coil, the elongated part of the spring arm (8) resting on the lug (13).

## Revendications

1. Cassette de bande magnétique, notamment cassette de bande vidéo comportant un abattant frontal (3) pivotant et précontraint par un ressort (7), la spire du ressort prenant appui par un axe (5) sur la face intérieure de la paroi latérale (4) de l'abattant frontal (3), et l'extrémité libre de la grande branche de ressort (8) passant sous l'abattant frontal (3), et comportant une moitié de boîtier supérieure (1) dans laquelle est logée la grande branche de ressort lors de l'assemblage, et une moitié de boîtier inférieure (2) qui comporte une plaque de verrouillage (6), pivotante, sur une face intérieure, dans la zone de l'abattant frontal, caractérisée en ce que la plaque de verrouillage (6) présente un ergot (13) oblique, faisant saillie par rapport à la plaque, excentré par rapport à l'axe de rotation de la plaque, et sur l'extrémité libre duquel repose la grande branche de ressort (8).

2. Cassette de bande magnétique selon la revendication 1, caractérisée en ce que l'extrémité libre de l'ergot (13) présente un évidement (14) en particulier en forme de fourche, pour le guidage latéral du ressort.

3. Cassette de bande magnétique selon les revendications 1 et 2, caractérisée en ce que l'ergot (13) fait saillie par rapport à la plaque de verrouillage (6) sur une distance telle que la grande branche de ressort (8) vient s'appliquer horizontalement.

4. Cassette de bande magnétique selon les revendications 1 à 3, caractérisée en ce que l'ergot (13) est réalisé dans la même matière plastique que la plaque de verrouillage (16).

5. Cassette de bande magnétique selon les revendications 1 à 4, caractérisée en ce que la grande branche de ressort est en U (15) et revient dans la zone de l'abattant frontal (3), à proximité de la spire de ressort, après un coude à 180º, la partie prolongée de la branche de ressort (8) reposant sur l'ergot (13).

FIG. 1

FIG. 2

FIG. 3

FIG. 4